# EUROPEAN PATENT SPECIFICATION

(11) **EP 2 610 955 B1**
(45) Date of publication and mention of the grant of the patent: **27.12.2017**
(21) Application number: 12804401.3
(22) Date of filing: 29.06.2012
(51) Int. Cl.: H01M 2/34, H01M 10/52, H01M 2/16, H01M 4/36, H01M 4/62

(54) **ELECTRODE ASSEMBLY FOR SECONDARY BATTERY AND LITHIUM SECONDARY BATTERY COMPRISING SAME**
ELEKTRODENANORDNUNG FÜR SEKUNDÄRBATTERIE UND LITHIUMSEKUNDÄRBATTERIE DAMIT
ENSEMBLE D'ÉLECTRODE POUR BATTERIE SECONDAIRE ET BATTERIE SECONDAIRE AU LITHIUM COMPRENANT UN TEL ENSEMBLE

(30) Priority: 30.06.2011 KR 20110064785
(43) Date of publication of application: 03.07.2013
(73) Proprietor: LG Chem, Ltd., Seoul 150-721 (KR)
(72) Inventor: KIM, Bo Hyun, Daejeon 305-340 (KR); KIM, Dae Il, Daejeon 305-509 (KR); LEE, Joong Min, Gunpo-si Gyeonggi-do 435-772 (KR)
(74) Representative: Cabinet Plasseraud
(86) International application number: PCT/KR2012/005197
(87) International publication number: WO 2013/002608

(56) References cited:
- JP-A- 2000 058 036
- JP-A- 2008 243 708
- KR-B1- 100 670 485
- US-A1- 2006 024 579
- US-A1- 2008 241 684

## Description

### TECHNICAL FIELD

The present invention disclosed herein relates to an electrode assembly for a secondary battery of which safety properties have been improved under abnormal conditions, and a lithium secondary battery including the same.

### BACKGROUND OF THE INVENTION

Interest in energy storage technologies has recently been increasingly higher. Efforts to study and develop electrochemical devices are gradually taking concrete shape as application fields of the energy storage technologies not only expand to energy sources for cellular phones, camcorders and notebook personal computers, but also expand to those for electric cars. The electrochemical devices are the most noteworthy field in this respect, and development of rechargeable secondary batteries among the electrochemical devices is becoming the focus of attention. Research and development have recently been worked on design of new electrodes and batteries in order to improve capacity density and specific energy in the development of such batteries.

Lithium secondary batteries developed in the early 1990s among currently applicable secondary batteries are in the spotlight due to their merits of high operating voltages and far large energy densities compared to typical batteries such as Ni-MH battery, Ni-Cd battery, and sulfuric acid-lead battery using aqueous electrolyte solutions. However, such lithium secondary batteries have demerits that there are safety limitations including ignition and explosion according to use of an organic electrolyte, and it is difficult to manufacture the lithium secondary batteries.

It is very important to evaluate and secure safety properties of the above-mentioned batteries. The most important consideration is that the batteries inflict an injury on users during misoperation of the batteries, and ignition and smoke emission in the batteries are strictly regulated by battery safety regulations to accomplish the intended goal. Therefore, many solutions for solving the safety limitations have been suggested.

Lithium secondary batteries are currently manufactured using polyolefin-based separators to prevent, a furthermore fundamental limitation, a short circuit of positive and negative electrodes. However, the above-mentioned separators have a demerit that they are heat-shrinking to their original sizes when they are exposed to high temperatures since polymer components normally melted at about 200 °C or less are used in the separators, and films pass through the stretching process of controlling the pore size and porosity to use the stretched films as the separators. Therefore, when the batteries are heated to high temperatures by internal and external stimuli, the separators are shrunk or melted to cause positive and negative electrodes to be brought into contact with each other and increase the short circuit possibility of the positive and negative electrodes, thereby emitting electrical energy radically to cause explosion and ignition of the batteries accordingly. Therefore, it is essential to develop separators which are not heat-shrinkable at high temperatures.

Such lithium secondary batteries are exposed to a danger of battery rupture since voltages are rapidly increased by internal or external short circuit of electrode assemblies, or overcharge or discharge of the batteries. Insulating tapes are attached to portions with a short circuit risk including welding portions between electrode tabs and end parts of positive and negative electrode plates in the electrode assemblies in order to prevent short circuits inside the secondary batteries. Further, the secondary batteries are electrically connected to safety devices such as Positive Temperature Coefficient (PTC) devices, thermal fuses, and protecting circuits, and such safety devices cut off the current to prevent the batteries from being ruptured when voltages or temperatures of the batteries are rapidly increased.

It has lately been emerging as a further important task to secure safety properties of the batteries as heating of positive and negative electrodes is increased during charging or discharging of the batteries according to enlargement and high capacity of the batteries. Particularly, it is difficult to promptly suppress the above-mentioned heating only with the safety devices installed outside the batteries when temperatures of the batteries are abnormally rapidly increased by short circuits or overcharges inside the batteries.

### DETAILED DESCRIPTION

### TECHNICAL PROBLEM

The present provides an electrode assembly for a lithium secondary battery which is capable of suppressing increases in temperatures of the batteries by cutting of the current when temperatures inside the batteries are increased, thereby suppressing further heating.

The present invention provides a lithium secondary battery with improved safety properties including the electrode assembly.

### TECHNICAL SOLUTION

Embodiments of the present invention provides electrode assemblies for a secondary battery according to claim 1.

In some embodiments, the PTC material layer may have an effective operating temperature ranging from about 80 °C to about 140 °C.

In other embodiments, the PTC material layer may have a thickness of about 1 *µ*m to about 30 *µ*m.

In still other embodiments, the PTC material layer may have the same area as that of each coating portion.

In yet other embodiments, the electrode assembly for a secondary battery may be any one selected from the group consisting of: a stack and folding type electrode assembly manufactured by folding a bi-cell and a full-cell in a state that the bi-cell and the full-cell intersect on a continuously longitudinally cut separation film; a stack and folding type electrode assembly manufactured by folding a bi-cell in a state that only the bi-cell is laid on a separation film; a stack and folding type electrode assembly manufactured by folding a full-cell in a state that only the full-cell is laid on the separation film; a Z type stack and folding electrode assembly manufactured by folding a bi-cell or a full-cell onto a separation film in a zigzag direction; a stack and folding type electrode assembly manufactured by continuously folding a bi-cell or a full-cell in the same direction; an electrode assembly manufactured by folding positive and negative electrodes in a state that the positive electrode and the negative electrode intersect on a longitudinally cut separation film; a jelly-roll type electrode assembly manufactured by winding a positive electrode plate, a separator, and a negative electrode plate in a direction in a state that the positive electrode plate, the separator, and the negative electrode plate are sequentially arranged; and a stack type electrode assembly.

Other embodiments of the present invention provide lithium secondary batteries including the electrode assembly, and still other embodiments of the present invention battery packs including the lithium secondary batteries.

In some embodiments, the battery pack may be used as power supply for a middle- or large-sized device.

In other embodiments, the middle- or large-sized device may be any one selected from the group consisting of: a power tool; electric cars including an Electric Vehicle (EV), a Hybrid Electric Vehicle (HEV), and a Plug-in Hybrid Electric Vehicle (PHEV); electric two-wheeled vehicles including an E-bike and an E-scooter; an electric golf cart; an electric truck; an electric commercial vehicle; and an electric power storage system.

### EFFECT OF THE INVENTION

The secondary battery according to the present invention includes material showing characteristics changed from conductor to nonconductor at a specific temperature, i.e., PTC (Positive Temperature Coefficient) characteristics which is added during the preparation of a positive or negative electrode such that the material of PTC phenomenon plays a role of enabling active material to exhibit constant conductivity regardless of charge or discharge while the batteries are normally operated, and the PTC material increases safety properties by changing the active material from conductor to nonconductor when temperatures inside the batteries are increased by short circuit or accidents.

Further, the battery according to the present invention allows a lithium secondary battery with a high capacity (18650 battery/2000 mAh or more) to be produced since safety problems generated according to an increase in the capacity of the batteries can be solved, and the batteries may reduce the production cost of the batteries since a separate protection circuit for securing battery safety properties is not necessary.

### BRIEF DESCRIPTION OF THE DRAWINGS

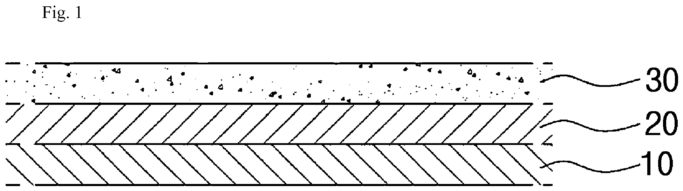

Fig.1 is a drawing simply showing an electrode for a secondary battery according to an embodiment of the present invention.

### DETAILED DESCRIPTION OF PREFERRED EMBODIMENTS

An electrode assembly according to an embodiment of the present invention and a lithium secondary battery including the same will now be described in detail.

Importance of electrically conductive polymers as a field of a functional polymer is gradually getting larger. A cost-efficient material of which production cost is low, and which can obtain merits such as excellent functionality and useful physical and chemical properties of the polymer material can be obtained by imparting electrical conductivity to polymer material.

An application field of the electrically conductive polymers is also diversified and specialized into an antistatic electrically conductive polymer, a self-heating electrically conductive polymer, or an electromagnetic wave-absorbing electrically conductive polymer, and various conductive composite materials are prepared for such applications. When temperature of a semi-crystalline polymer containing conductive filler is increased, layers between filler particles within the polymer are increased due to thermal expansion in a polymer melting area such that a flow of electrons is interrupted to generate a phenomenon that resistance is rapidly increased according as the temperature increases, wherein this phenomenon is called as PTC (Positive Temperature Coefficient) phenomenon.

Generally, many polymer materials have been recognized as materials having good insulating properties, and the polymer materials play an excellent role of electrical insulating materials due to their low electrical conductivities. However, the polymer materials function as electrical conductors when fillers such as carbon black, carbon fiber and metal powder are added in the polymer materials. The added fillers form electrical paths within the polymer materials such that the electrical paths function as paths of electrons. PTC is the generic term for material which functions as conductor by injecting conductive particles into polymer material, and which is used to prevent damages of products or electronic circuits due to the temperature or overcurrent when an overcurrent flows at a specific temperature. PTC materials that have typically been used have excellent thermal and electrical protection properties.

The present invention provides an electrode assembly including electrodes on which a material layer (hereinafter referred to as 'PTC material layer') showing the above-mentioned PTC (Positive Temperature Coefficient) phenomenon is formed.

The PTC material layer may include polymer material and conductive filler.

Ordinary thermoplastic polymers used in the preparation of PTC material may be adopted and used as the polymer material without specific limitations. Concretely, the reason is that the thermoplastic polymers are semi-crystalline materials, and it may be easier to obtain PTC characteristics from the semi-crystalline materials when comparing the thermoplastic polymers with amorphous thermoplastic polymers. In an embodiment of the present invention, the semi-crystalline thermoplastic materials may have a crystallinity of about 5% or more, specifically about 10% or more, and more specifically about 15% or more, wherein the term "semi-crystalline" means that the thermoplastic materials have crystallinity which is enough to allow behaviors of the thermoplastic materials to show a considerable amount of behaviors, but incomplete behaviors of crystalline thermoplastic materials.

Examples of thermoplastic polymers that are usable in the present invention may include polyethylenes (PE) including high density polyethylene, linear low density polyethylene, low density polyethylene, medium density polyethylene, maleic anhydride functionalized polyethylene, maleic anhydride functionalized elastomeric ethylene copolymer such as EXXELOR VA1801 and VA1803 of ExxonMobile, ethylene-butene copolymer, ethylene-octene copolymer, ethylene-acrylate copolymer such as ethylene-methyl acrylate, ethylene-ethyl acrylate or ethylene butyl acrylate copolymer and glycidyl methacrylate modified polyethylene, polypropylene (PP), maleic anhydride functionalized polypropylene, glycidyl methacrylate modified polypropylene, polyvinylchloride (PVC), polyvinyl acetate, polyvinyl acetyl, acryl resins, syndiotactic polystyrene (sPS), polyamides that include PA6, PA66, PA11, PA12, PA6T and PA9T, but are not limited thereto, poly-tetra-fluoroethylene (PTFE), polybutylene-terephthalate (PBT), polyphenylenesulfide (PPS), polyamide-imide, polyimide, polyethylene vinyl acetate (EVA), glycidyl methacrylate modified polyethylene vinyl acetate, polyvinyl alcohol, poly(methyl methacrylate) (PMMA), polyisobutylene, poly(vinylidene chloride), poly(vinylidene fluoride) (PVDF), poly(methylacrylate), polyacrylonitrile, polybutadiene, polyethylene-terephthalate (PET), poly(8-amino caprylic acid), poly(vinyl alcohol) (PVA), polycaprolactone, or a combination of blends, mixtures or at least one polymer thereof. However, the thermoplastic polymers are not limited to the examples. In an embodiment of the present invention, polyethylene polymer such as high density polyethylene may be used as the thermoplastic polymer, wherein "high density" means that the polymer has a density of about more than 0.94 g/cm3. Although the above-mentioned thermoplastic materials are ordinarily used as polymer material included in the PTC material layer, it does not mean that use of thermosetting resins is excluded.

The amount of the thermoplastic polymers may range from about 30 wt.% to about 90 wt.%, specifically from about 40 wt.% to about 70 wt.%, and more specifically from about 40 wt.% to about 60 wt.% of the total weight of a PTC composition.

Examples of the conductive filler may include carbon-based materials such as carbon black, carbon fiber, and graphite, but the conductive filler is not always limited thereto.

The amount of the conductive filler may range from about 10 wt.% to about 70 wt.%, specifically from about 30 wt.% to about 60 wt.%, and more specifically from about 40 wt.% to about 60 wt.% of the total weight of the PTC composition.

On the other hand, ceramic material such as BaTiO3 may be used as the PTC material layer. Furthermore, pure material BaTiO3 may be mixed and synthesized with Y203 and Nb205 having valences of +3 and +5 respectively to prepare a semiconducting ceramic PTC material layer, and elements Pb and Sr may substitute for the location of Ba for temperature transition.

The electrode assembly includes a positive electrode in which positive electrode active material is coated on a positive electrode collector, and to which a positive terminal is connected, a negative electrode in which negative electrode active material is coated on a negative electrode collector, and to which a negative terminal is connected, and a separator interposed between the positive and negative electrodes.

The positive electrode plate has a positive electrode collector made of a strip-shaped metal foil and a positive electrode coating portion coated on at least one side of the positive electrode collector. The positive electrode collector may be preferably aluminum foil that is metal foil with excellent conductivity, and the positive electrode coating portion may be compositions which are not particularly limited in the present invention, and in which well-known lithium based oxides are mixed with binder, plasticizer, conductive material and others. The positive electrode plate includes a positive electrode lead attached to a positive electrode non-coating portion.

The negative electrode plate has a negative electrode collector made of a strip-shaped metal foil and a negative electrode coating portion coated on at least one side of the negative electrode collector.

The negative electrode collector may be preferably copper foil with excellent conductivity, and the negative electrode coating portion may be compositions in which negative electrode active material such as carbon material is mixed with binder, plasticizer, conductive material and others. The negative electrode plate also includes a negative electrode lead attached to a negative electrode non-coating portion just as in the positive electrode plate.

In order to electrically connect the positive and negative electrode leads to surfaces of the positive and negative electrode non-coating portions, the positive and negative electrode leads are attached to the positive and negative electrode non-coating portions by conductive adhesives or welding such as laser welding or ultrasonic welding such that an electric current can be applied from the positive and negative electrode leads to the positive and negative electrode non-coating portions. Shapes of electrode assemblies included in the present invention are not particularly limited, and various shapes of the electrode assemblies may all be included. Examples of the electrode assemblies may include a stack and folding type electrode assembly including different types of stack type unit cells of bi-cell and full-cell which cross each other and are wound by a longitudinally cut separation film, a stack and folding type electrode assembly including the same types of stack type unit cells without the bi-cell and full-cell being distinguished from each other as the same type of stack and folding type electrode assembly as the above-mentioned stack and folding type electrode assembly, a Z type stack and folding electrode assembly in which the stack type unit cells are folded in a zigzag direction when winding the stack type unit cells with the separation film, a stack and folding electrode assembly in which the stack type unit cells are continuously wound in the same direction, an electrode assembly in which the stack type cells as unit cells are not folded with the separation film, but the positive and negative electrodes are continuously wound with the separation film in a state that positive and negative electrodes are alternately laid on the separation film, a Z type electrode assembly in which the stack type cells as unit cells are not folded with the separation film, but the positive and negative electrodes are wound in a zigzag direction with the separation film in a state that the positive and negative electrodes are alternately laid on the separation film, and a jelly-roll type electrode assembly in which they are wound in a direction in a state that an ordinary stack type electrode assembly, a positive electrode plate, a separator, and a negative electrode plate are sequentially disposed.

Further in the present invention, the electrode assembly is housed in a battery case that houses the electrode assembly such that the electrode assembly is not broken away, and a lithium secondary battery is completed by sealing the battery case after injecting electrolyte into the battery case.

The battery case may be a can or pouch.

A pouch type case according to the present invention may include a film which is formed on facing sides of upper and lower cases and formed of material with thermal adhesive property, or multiple films which are formed from other different materials and sequentially laid up and bonded, wherein a film layer of the upper and lower cases may include a polyolefin-based resin layer which has thermal adhesive property to function as sealing material, an aluminum layer functioning as a substrate which maintains mechanical strength and a barrier layer of moisture and oxygen, and a nylon layer functioning as a substrate and protection layer. The external shape of assembled upper and lower cases maintains an approximately rectangular shape such that the shape of assembled upper and lower cases corresponds with the external shape of the battery part in order to minimize volume of the assembled upper and lower cases.

At least one side of the upper and lower cases may be integrally folded, and other sides thereof may be reciprocally opened.

A space part in which the electrode assembly is housed may be formed in the lower case or the upper case, and a sealing part is formed along the edge of the space part. Further, the space part in which the electrode assembly is housed may be formed in both lower and upper cases.

The sealing part is a portion in which the space part is sealed by thermal fusion after the electrode assembly is housed in the space part.

Further, the present invention provides a battery pack including the lithium secondary battery.

A battery pack according to the present invention may be used as power supply of a small device and may be preferably used as power supply of a middle- or large-sized device including a plurality of battery cells.

Preferable examples of the middle- or large-sized device may include: a power tool; electric cars such as an Electric Vehicle (EV), a Hybrid Electric Vehicle (HEV), and a Plug-in Hybrid Electric Vehicle (PHEV); electric two-wheeled vehicles such as an E-bike and an E-scooter; an electric golf cart; an electric truck; an electric commercial vehicle; and an electric power storage system. However, the middle- or large-sized device is not limited to the examples.

Hereinafter, it will be described about an exemplary embodiment of the present invention in conjunction with the accompanying drawing.

Fig. 1 is illustrates an electrode including a PTC material layer 30 according to an embodiment of the present invention, wherein the PTC material layer 30 is a material layer showing PTC (Positive Temperature Coefficient) characteristics which change active material from conductor to nonconductor at a specific temperature, and the PTC material layer plays a role of enabling the active material to exhibit constant conductivity irrespective of charge or discharge while the battery is normally operated, but it plays a role of changing the active material from conductor to nonconductor, when an internal temperature of the battery is increased by short circuit or accidents, such that the battery does not operate properly.

An effective operating temperature of the PTC material layer 30 is preferably from about 80 °C to about 140 °C. "The effective operating temperature of the PTC material layer" means a temperature at which the PTC material layer exhibits PTC phenomenon, i.e., a temperature which is capable of performing a function of fuse that cuts off the electric current as resistance is radically increased according to the generation of Joule heat when an excessive electric current is generated. A lithium secondary battery is normally used in a temperature range from about -20 °C to about 60 °C in case of discharge and from about 0 °C to about 45 °C in case of charge.

However, an internal temperature of the battery may radically increase to about 100 °C or more due to overcharge, internal short circuit and so on, wherein it is desirable to construct the battery such that the PTC material layer is operated. However, it is not desirable that the temperature exceeds about 140 °C from the safety aspect of the battery since the PTC phenomenon does not occur until the internal temperature of the battery increases excessively if a temperature at which PTC phenomenon is revealed exceeds about 140 °C.

The PTC material layer is formed on at least one of positive and negative electrodes, and it is preferable to form the PTC material layer on an active material layer 20 on the positive electrode collector or negative electrode collector. For instance, it is apprehended that the positive electrode and negative electrode located at both sides of the separator are brought into contact with each other since a polyolefin-based separator is heat-shrinkable if the internal temperature of the battery is suddenly increased. Therefore, the PTC material layer is formed on outermost faces of the positive and negative electrodes, particularly opposite faces of the positive and negative electrodes, to enhance safety properties of the battery by minimizing the possibility that the positive and negative electrodes are brought into contact with each other although the separator is heat-shrinkable as described above, thereby preventing internal short circuit of the battery.

It is preferable to form the PTC material layer such that the PTC material layer has the same area as each active material layer. The PTC material layer is preferably formed such that the PTC material layer has the same area as each active material layer since it is apprehended that short circuit may generates inside the active material layer in which the PTC material layer is not formed if the PTC material layer has an area that is smaller than that of the active material layer, and the PTC material layer for preventing the internal short circuit is formed on a non-coating portion of an electrode that is free from the internal short circuit if the PTC material layer has an area that is larger than that of the active material layer.

Further, it is preferable to form the PTC material layer to a thickness ranging from about 1 *µ*m to about 30 *µ*m. It is not preferable to form the PTC material layer to a thickness of less than about 1 *µ*m or about more than 30 *µ*m since the PTC phenomenon is not revealed easily if thickness of a PTC coating layer is less than about 1 *µ*m, and since volume (thickness) of the electrode increases to result in a decrease in energy density if thickness of the PTC coating layer is more than about 30 *µ*m.

A manufacturing method of a secondary battery including the above-mentioned electrode assembly is simply described as follows.

The manufacturing method includes: mixing positive electrode active materials with polyvinylidene fluoride as binder to prepare positive electrode active material slurry; coating the positive electrode active material slurry on an aluminum foil as a positive electrode collector; drying the positive electrode active material slurry coated on the aluminum foil; and coating the PTC material on the positive electrode coating portion to prepare a positive electrode. The manufacturing method may certainly include partially adding conductive materials such as carbon black and Ketjen black in the positive electrode active material slurry.

Further, the manufacturing method includes: mixing negative electrode active materials with polyvinylidene fluoride as binder to prepare negative electrode active material slurry, wherein carbon material such as amorphous carbon or crystalline carbon, and SnO2 may be used as the negative electrode active materials; coating the negative electrode active material slurry on a copper foil as a negative electrode collector; drying the negative electrode active material slurry coated on the copper foil; and coating the PTC material on the negative electrode coating portion to prepare a negative electrode. The manufacturing method may certainly include partially adding conductive materials such as carbon black and Ketjen black in the negative electrode active material slurry.

The manufacturing method includes winding the prepared positive and negative electrodes along with a separator that is a porous film formed from polypropylene or polyethylene and housed into a second battery outer case, injecting electrolyte into the outer case, and sealing the outer case to complete a secondary battery.

Examples of the electrolyte may include solutions prepared by dissolving lithium salts such as LiPF₆, LiBF₆, LiAsF₆, LiCF₃SO₃, LiN(CF₃SO₂)₃, LiClO₄ and the like into nonaqueous organic solvent such as propylene carbonate, ethylene carbonate, dimethyl carbonate, diethyl carbonate, or mixtures thereof.

Hereinafter, the present invention will be described in more detail with reference to the following examples and experimental example. However, the following examples and experimental example are provided for illustrative purposes only, and the scope of the present invention should not be limited thereto in any manner.

### Example 1

LiCoO₂ as positive active material, polyvinylidene fluoride as binder, and a Ketjen black mixture as conductive material were mixed with N-methyl pyrrolidone at a weight ratio of about 94:4:2 to prepare positive active material slurry. After coating the slurry on an aluminum foil, the slurry coated on the aluminum foil was dried to prepare a positive electrode coating portion. A composition (PTC material) including 10 weight parts of carbon black and 15 weight parts of high density polyethylene on the basis of 100 weight parts of LiCoO₂ was coated on the positive electrode coating portion to prepare a positive electrode.

Amorphous carbon as negative active material and polyvinylidene fluoride as binder were mixed with N-methyl pyrrolidone at a weight ratio of about 95:5 to prepare negative active material slurry. After coating the slurry on a copper foil, the slurry coated on the copper foil was dried to prepare a negative electrode coating portion. A composition (PTC material) including 10 weight parts of carbon black and 15 weight parts of high density polyethylene on the basis of 100 weight parts of amorphous carbon was coated on the negative electrode coating portion to prepare a negative electrode.

A polyethylene porous film prepared by Asahi Kasei Kogyo Kabushiki Kaisha was used as a separator, an electrolyte prepared by dissolving LiPF₆ into a mixture in which ethylene carbonate, dimethyl carbonate and diethyl carbonate were mixed at a volume ratio of about 3:3:4 was injected into an electrolyte injection port, and the electrolyte injection port was sealed to complete a pouch type lithium secondary battery.

### Example 2

A pouch type lithium secondary battery was completed in the same method as in the example 1 except that carbon fiber instead of carbon black was used.

### Example 3

A pouch type lithium secondary battery was completed in the same method as in the example 1 except that BaTiO₃ as PTC material was used.

### Comparative Example 1

A pouch type lithium secondary battery was completed in the same method as in the example 1 except that the PTC material was not coated.

### Experimental Example

Safety properties of the batteries were evaluated after leaving alone lithium secondary batteries of the examples 1 to 3 and comparative example 1 within a hot box having a temperature of about 150°C. Results of the evaluated safety properties were written in the table 1.

**[Table 1]**

| Classification | Example 1 | Example 2 | Example 3 | Comparative Example 1 |
|---|---|---|---|---|
| Results of safety properties | Nothing is wrong | Nothing is wrong | Nothing is wrong | The temperatures were rapidly increased after leaving alone the batteries within the hot box for 40 minutes |

### SYMBOL OF EACH OF THE ELEMENTS IN THE FIGURES

10: electrode collector
20: active material layer
30: PTC material layer

## Claims

1. An electrode assembly for a secondary battery comprising:
a positive electrode having a positive electrode coating portion formed on a positive electrode collector;
a negative electrode having a negative electrode coating portion formed on a negative electrode collector; and
a polyolefin-based separator interposed between the positive and negative electrodes,
**characterized in that**
two PTC (Positive Temperature Coefficient) material layers are formed between the polyolefin-based separator and the positive electrode coating portion on the one hand, and between the polyolefin-based separator and the negative electrode coating portion on the other hand,
the PTC material layers are selected from the group consisting of a composition including carbon black and high density polyethylene; composition including carbon fiber and high density polyethylene; and BaTiO₃.

2. The electrode assembly for a secondary battery as claimed in claim 1, wherein the PTC material layer has an effective operating temperature ranging from 80°C to 140°C .

3. The electrode assembly for a secondary battery as claimed in claim 1, wherein the PTC material layer has a thickness of about 1 *µ*m to about 30 *µ*m.

4. The electrode assembly for a secondary battery as claimed in claim 1, wherein the PTC material layer has the same area as that of each coating portion.

5. The electrode assembly for a secondary battery as claimed in claim 1, wherein the electrode assembly for a lithium secondary battery is any one selected from the group consisting of: a stack and folding type electrode assembly manufactured by folding a bi-cell and a full-cell in a state that the bi-cell and the full-cell intersect on a continuously longitudinally cut separation film; a stack and folding type electrode assembly manufactured by folding a bi-cell in a state that only the bi-cell is laid on a separation film; a stack and folding type electrode assembly manufactured by folding a full-cell in a state that only the full-cell is laid on the separation film; a Z type stack and folding electrode assembly manufactured by folding a bi-cell or a full-cell onto a separation film in a zigzag direction; a stack and folding type electrode assembly manufactured by continuously folding a bi-cell or a full-cell in the same direction; an electrode assembly manufactured by folding positive and negative electrodes in a state that the positive electrode and the negative electrode intersect on a longitudinally cut separation film; a jelly-roll type electrode assembly manufactured by winding a positive electrode plate, a separator, and a negative electrode plate in a direction in a state that the positive electrode plate, the separator, and the negative electrode plate are sequentially arranged; and a stack type electrode assembly.

6. A lithium secondary battery comprising the electrode assembly according to any one of claims 1 to 5.

7. A battery pack comprising the lithium secondary battery according to claim 6.

8. The battery pack as claimed in claim 7, wherein the battery pack is used as a power supply for a middle- or large-sized device.

9. The battery pack as claimed in claim 8, wherein the middle- or large-sized device is any one selected from the group consisting of: a power tool; electric cars including an Electric Vehicle (EV), a Hybrid Electric Vehicle (HEV), and a Plug-in Hybrid Electric Vehicle (PHEV); electric two-wheeled vehicles including an E-bike and an E-scooter; an electric golf cart; an electric truck; an electric commercial vehicle; and an electric power storage system.

## Patentansprüche

1. Elektrodenanordnung für eine Sekundärbatterie, umfassend:
eine positive Elektrode mit einem Beschichtungsabschnitt der positiven Elektrode, welcher an einem Kollektor der positiven Elektrode ausgebildet ist;
eine negative Elektrode mit einem Beschichtungsabschnitt der negativen Elektrode, welcher an einem Kollektor der negativen Elektrode ausgebildet ist; und
einen auf Polyolefin basierenden Separator, welcher zwischen der positiven und der negativen Elektrode eingefügt ist,
**dadurch gekennzeichnet, dass**
zwei PTC- (positiver Temperaturkoeffizient) Materialschichten zwischen dem auf Polyolefin basierenden Separator und dem Beschichtungsabschnitt der positiven Elektrode einerseits und zwischen dem auf Polyolefin basierenden Separator und dem Beschichtungsabschnitt der negativen Elektrode andererseits ausgebildet sind,
die PTC-Materialschichten ausgewählt sind aus der Gruppe bestehend aus einer Kohleschwarz und Polyethylen mit hoher Dichte umfassenden Zusammensetzung; einer Kohlefaser und Polyethylen mit hoher Dichte umfassender Zusammensetzung; und BaTiO₃.

2. Elektrodenanordnung für eine Sekundärbatterie nach Anspruch 1, wobei die PTC-Materialschicht eine effektive Betriebstemperatur in einem Bereich von 80°C bis 140°C aufweist.

3. Elektrodenanordnung für eine Sekundärbatterie nach Anspruch 1, wobei die PTC-Materialschicht eine Dicke von etwa 1 µm bis etwa 30 µm aufweist.

4. Elektrodenanordnung für eine Sekundärbatterie nach Anspruch 1, wobei die PTC-Materialschicht die gleiche Fläche wie die jedes Beschichtungsabschnitts aufweist.

5. Elektrodenanordnung für eine Sekundärbatterie nach Anspruch 1, wobei die Elektrodenanordnung für eine Lithium-Sekundärbatterie irgendeine ist, ausgewählt aus der Gruppe, bestehend aus: einer Elektrodenanordnung eines gestapelten und gefalteten Typs, welche durch Falten einer Bi-Zelle und einer Voll-Zelle in einem Zustand hergestellt ist, sodass sich die Bi-Zelle und die Voll-Zelle an einem kontinuierlich longitudinal geschnittenen Separationsfilm kreuzen; einer Elektrodenanordnung eines gestapelten und gefalteten Typs, welche durch Falten einer Bi-Zelle in einem Zustand hergestellt ist, sodass nur die Bi-Zelle an einem Separationsfilm anliegt; eine Elektrodenanordnung eines gestapelten und gefalteten Typs, welche durch Falten einer Voll-Zelle in einem Zustand hergestellt ist, sodass nur die Voll-Zelle an dem Separationsfilm anliegt; eine Z-Typ-Stapel-und Falt-Elektrodenanordnung, welche durch Falten einer Bi-Zelle oder einer Voll-Zelle auf einem Separationsfilm in einer Zickzack-Richtung hergestellt ist; eine Elektrodenanordnung eines gestapelten und gefalteten Typs, welche durch kontinuierliches Falten einer Bi-Zelle oder einer Voll-Zelle in die gleiche Richtung hergestellt ist; eine Elektrodenanordnung, welche durch Falten von einer positiven und einer negativen Elektrode in einem Zustand hergestellt ist, sodass die positive Elektrode und die negative Elektrode sich an einem longitudinal geschnittenen Separationsfilm kreuzen; eine Elektrodenanordnung eines Jelly-Roll-Typs, welche durch Winden einer positiven Elektrodenplatte, eines Separators und einer negativen Elektrodenplatte in eine Richtung in einem Zustand hergestellt ist, sodass die positive Elektrodenplatte, der Separator und die negative Elektrodenplatte sequenziell angeordnet sind; und eine Elektrodenanordnung eines gestapelten Typs.

6. Lithium-Sekundärbatterie, welche die Elektrodenanordnung nach einem der Ansprüche 1 bis 5 umfasst.

7. Batteriepack, welcher die Lithium-Sekundärbatterie nach Anspruch 6 umfasst.

8. Batteriepack nach Anspruch 7, wobei der Batteriepack als eine Energiezufuhr für eine mittelgroß oder groß dimensionierte Vorrichtung verwendet wird.

9. Batteriepack nach Anspruch 8, wobei die mittelgroß oder groß dimensionierte Vorrichtung irgendeine ausgewählte aus der Gruppe ist, welche besteht aus: einem elektrischen Werkzeug; elektrischen Fahrzeugen, umfassend ein Elektro-Fahrzeug (EV), ein Hybrid-Elektro-Fahrzeug (HEV), und ein Plug-in-Hybrid-Elektro-Fahrzeug (PHEV); elektrischen Zweiradfahrzeugen, umfassend ein Elektrofahrrad und einen Elektroroller; einem elektrischen Golfwagen; einem elektrischen Lastwagen; einem elektrischen Nutzfahrzeug; und einem elektrischen Energiespeichersystem.

## Revendications

1. Ensemble d'électrodes pour une batterie secondaire comprenant :
une électrode positive ayant une portion de revêtement d'électrode positive formée sur un collecteur d'électrode positive ;
une électrode négative ayant une portion de revêtement d'électrode négative formée sur un collecteur d'électrode négative ; et
un séparateur à base de polyoléfine intercalé entre les électrodes positive et négative,
**caractérisé en ce que**
deux couches de matériau PTC (à coefficient positif de température) sont formées entre le séparateur à base de polyoléfine et la portion de revêtement d'électrode positive d'une part, et entre le séparateur à base de polyoléfine et la portion de revêtement d'électrode négative d'autre part,
les couches de matériau PTC sont choisies dans le groupe constitué d'une composition comportant du noir de carbone et du polyéthylène haute densité ; d'une composition comportant de la fibre de carbone et du polyéthylène haute densité ; et du BaTiO₃.

2. Ensemble d'électrodes pour une batterie secondaire selon la revendication 1, dans lequel la couche de matériau PTC a une température de service efficace allant de 80 °C à 140 °C.

3. Ensemble d'électrodes pour une batterie secondaire selon la revendication 1, dans lequel la couche de matériau PTC a une épaisseur d'environ 1 µm à environ 30 µm.

4. Ensemble d'électrodes pour une batterie secondaire selon la revendication 1, dans lequel la couche de matériau PTC a la même surface que celle de chaque portion de revêtement.

5. Ensemble d'électrodes pour une batterie secondaire selon la revendication 1, dans lequel l'ensemble d'électrodes pour une batterie secondaire au lithium est l'un quelconque choisi dans le groupe constitué : d'un ensemble d'électrodes de type à empilement et pliage fabriqué en pliant une pile double et une pile entière dans un état où la pile double et la pile entière se coupent sur un film de séparation coupé longitudinalement en continu ; d'un ensemble d'électrodes de type à empilement et pliage fabriqué en pliant une pile double dans un état où seule la pile double est posée sur un film de séparation ; un ensemble d'électrodes de type à empilement et pliage fabriqué en pliant une pile entière dans un état où seule la pile entière est posée sur le film de séparation ; un ensemble d'électrodes à empilement et pliage de type Z fabriqué en pliant une pile double ou une pile entière sur un film de séparation dans une direction en zigzag ; un ensemble d'électrodes de type à empilement et pliage fabriqué en pliant en continu une pile double ou une pile entière dans la même direction ; un ensemble d'électrodes fabriqué en pliant des électrodes positive et négative dans un état où l'électrode positive et l'électrode négative se coupent sur un film de séparation coupé longitudinalement ; un ensemble d'électrodes de type électrodes enroulées fabriqué en enroulant une plaque d'électrode positive, un séparateur, et une plaque d'électrode négative dans une direction dans un état où la plaque d'électrode positive, le séparateur, et la plaque d'électrode négative sont agencés séquentiellement ; et un ensemble d'électrodes de type à empilement.

6. Batterie secondaire au lithium comprenant l'ensemble d'électrodes selon l'une quelconque des revendications 1 à 5.

7. Bloc-batterie comprenant la batterie secondaire au lithium selon la revendication 6.

8. Bloc-batterie selon la revendication 7, dans lequel le bloc-batterie est utilisé en tant qu'alimentation électrique pour un dispositif de taille moyenne ou grande.

9. Bloc-batterie selon la revendication 8, dans lequel le dispositif de taille moyenne ou grande est l'un quelconque choisi dans le groupe constitué : d'un outil électrique ; de voitures électriques comportant un véhicule électrique (EV), un véhicule électrique hybride (HEV), et un véhicule électrique hybride rechargeable (PHEV) ; de véhicules de roues électriques comportant un vélo électrique et un scooter électrique ; d'une voiturette de golf électrique ; d'un camion électrique ; d'un véhicule commercial électrique ; et d'un système de stockage d'énergie électrique.
